# EUROPEAN PATENT APPLICATION

(11) **EP 0 674 963 A1**
(43) Date of publication of application: **04.10.1995**
(21) Application number: 95104507.9
(22) Date of filing: 27.03.1995
(51) Int. Cl.: B23K 1/00

(54) **Locking system of the weld rings to position at the extremity of the tubes to weld of the injection/sucking fittings for heat exchangers**

(30) Priority: 01.04.1994 IT UD940052
(71) Applicant: RACO S.p.A., 33040 Attimis (UD) (IT)
(72) Inventor: Hutter, Gerald, I-33040 Attimis (UD) (IT)
(74) Representative: D'Agostini, Giovanni, Dr.

(57) **Abstract**

External locking system of the rings of weld material (3) to position at the extremity of the tubes to weld of the of injection/sucking fittings of collectors for heat exchangers, characterized by the fact to:
· prearrange the weld material rings (3) with the respective head extremities distanced (I);
· insert said weld material rings (3) above the collector tubes (11) that must support them for the subsequent welding;
· tighten said weld material rings (3) until the surface of the tube that supports it (11) is deformed, forming (3');
   - slight interference (i) and
   - substantial conjunction of the respective head extremities (31).

## Description

The present invention has as an object a locking system for the weld rings to position at the extremity of the tubes to weld of the of injection/sucking fittings for heat exchangers.

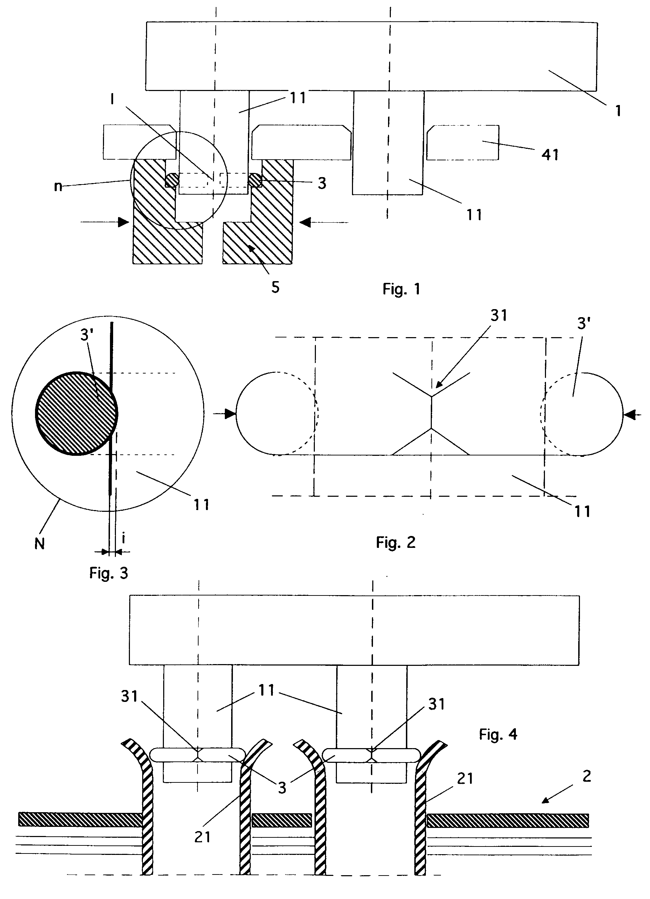

It is known that welding of collectors on heat exchangers is presently carried out in the following way:
a) using brazing alloy thread in the area to be welded;
b) fixing brazing alloy rings to the extremities to be welded (see fig.1).

The application substantially concerns the second method for the finned pack heat exchangers where substantially two or more tubes of a collector are inserted into the respective widened opening of the finned pack exchanger, by externally head pre-inserting an alloy weld ring, to then provide, by means of heating, the fusion of the weld material ring to obtain the braze welding.

At present this second method is carried out with the following method:
- the weld material rings (3), having an internal diameter (Di) less than the external diameter (De) of the tubes (11) of the collector to be welded (1) to the exchanger (2) are placed in head widenings able to contain them, of corresponding holes with diameter slightly greater than the diameter (De) of the tubes of the collector to be welded (11) made in a mask or template,
- the collector (1), with the respective tubes (11) with external diameter already previously submitted to calibration, is pushed against the mask/template forcing the respective tubes of the collector (11) to penetrate in said holes of the mask/template, crossing forcedly in this way the said weld material rings (3) placed at the front of said holes of the mask/template, for a certain depth.

In this way the weld material rings (3) are obliged to widen slightly and for elasticity remain attached (locked) around the respective tubes (11) of the collector, that is consequently extracted and then placed on the respective coupling fittings (21) of the finned pack exchanger (2) to be welded by means of heat braze welding.

This system presents the drawback deriving from the fact that the poor elasticity of the weld material composing the brazing alloy rings (11), does not ensure the locking of the same on the respective tubes (11) of the collector, therefore because of this, the drawback that these fall into the subsequent manipulation of the collector is frequent, with all the harmful consequences deriving from the necessity of the substitution.

The frequent fall of the rings during the subsequent manipulations of collectors that must be carried out with notable caution, supports the fact that it is necessary to have an attentive control for the positioning of the collector on the heat exchanger to verify if the ring is present or not or that it does not fall during this last operative phase.

Additionally, the forced penetration of the collector tubes (11) in said mask/template, obliges said weld material rings (3) to widen slightly (generally of several decimals of millimetre).

The widening of the weld material ring, determines a discontinuity in the alloy weld in the braze welding phase, precisely because the ring in the light detach zone has in the respective circumference a weld of less quantity of material, causing welding that could be defective because it is not watertight, or the corresponding part to the detaching of the ring cannot be filled with weld material.

Aim of the present invention is to obviate the above-mentioned drawbacks.

The problem is solved according to the characteristics of the first claim.

Independently from the alloy type of the weld material, it is known that the better and uniform the distribution of the solid weld material (continuity of the ring around the tube), the better the distribution of the penetration of the weld material that from solid will be liquefied, ensuring the hold between the two tubes.

The perfect solution therefore is that the ring of the weld material (3) is perfectly continuous, or not detached.

In such a case besides eliminating any defect, one will be able to reduce the amount of weld material to a minimum (diameter of the section of the weld material ring) also saving in weld material quantity, equally with satisfactory results and with guaranteed result of watertightness between the two tubes.

In order to ensure that the alloy ring does not fall during the manipulations of the collector in the subsequent manipulation operations and in order to ensure a better distribution of the weld material braze welding, as claimed, the fixing system of said weld material ring (3), is carried out according to a new technique, or according to the following characteristics and phases:
· one prepares a weld material ring (3):
   - with an internal circumferential development substantially equal to or less than the external circumferential development (De) of the tube that must support it, but
   - widened, or with heads not fitting and therefore with an internal diameter (Di) greater than or at a maximum equal to the diameter of the tube of the collector (11) that must be fitted;
· said rings (3) arc inserted on the respective collector tubes (11) that must be welded, the rings are clamped on the respective tube of the fitted collector (11) by means of clamping (5), until:
   - penetrating within the circumferential surface of the respective collector tube that it fits (11), with permanent interference deformation (i);
   - substantially reapproaching the respective extremities (31) previously detached from the ring (3').

Substantial joining of the ring is realized which will subsequently block any possibility of the actual ring falling.

Additionally its head junction forming a continuity will improve the distribution effect of the weld material and it will ensure the watertightness on the entire circumference also with a lower quantity of weld material (section of the ring).

Such prerogatives constitute a notable advantage regarding the safety of the entire welding process of collectors on the heat exchangers.

These and other advantages will appear from the subsequent description of illustrative preferential solutions of realization in connection to the drawings attached.
Figure 1 is a schematic view of the fitting system of a ring and its clamping around one of the two collectors tubes.
Figure 2 is a view of the enlarged ring after being clamped, with visualization of the junction of its head (continuity).
Figure 3 is a section view of the penetration of the ring on the collector tube after clamping.
Figure 4 is a partial section view of the junction zone of collectors tubes to the heat exchanger for the accomplishment of the subsequent braze welding phase.

As is disclosed from the drawings, 1 indicates the collector, 2 the finned pack heat exchanger and 3 the weld material ring, (in the specific case of Fig. 1 already fitted onto the tube (11) with detachment of the head for an "I" entity equal to the greater length of its internal circumference in respect, at least, to its reduced final circumference after clamping equal or less than the length of the external circumference of the respective tube of the collector (11) and with an internal diameter (Di) equal to or greater than the external diameter (De) of said collector tube (11) that it fits).

After this fitting, one provides, with clamping, (equipment with opposite jaws 5) the locking of the ring 3 around the respective tube 11 deforming it as indicated in figure 3 and joining the heads as indicated in figure 2.

In this way ring 3', so clamped will not be able to fall and it will have realized its continuity at the same time.

At the end of this operation, that can be carried out also with the help of a guide mask (41) and with clamping means (5) that can at the same time clamp both rings (3) of the two tubes of the collector in one single phase, one will proceed by known technique to the positioning of the collector on the heat exchanger and to the respective braze welding as indicated in Figure 4.

## Claims

1. External locking system of the rings of weld material (3) to position at the extremity of the tubes to weld of the injection/sucking fittings of collectors for heat exchangers, characterized by the fact to:
· prearrange the weld material rings (3) with the respective head extremities distanced (I);
· insert said weld material rings (3) above the collector tubes (11) that must support them for the subsequent welding;
· tighten said weld material rings (3) until the surface of the tube that supports it (11) is deformed, forming (3');
- slight interference (i) and
- substantial conjunction of the respective head extremities (31).

2. System according to claim 1, characterized in that said weld material rings before said clamping (3) have substantially:
· an internal diameter (Di) equal to or greater than the external diameter (De) of the respective collector tube (11) that it must fit;
· an internal circumferential development of continuous material, lower than or at the most equal to the circumferential development of the external surface of said collector tube (11) that it must fit.
